# EUROPEAN PATENT APPLICATION

(11) **EP 3 326 572 A1**
(43) Date of publication of application: **30.05.2018**
(21) Application number: 16200802.3
(22) Date of filing: 25.11.2016
(51) Int. Cl.: A61C 9/00

(54) **INTRAORAL SCANNING DEVICE AND METHOD FOR HIGH-RESOLUTION ULTRASONIC SCAN AND 3D RECONSTRUCTION OF TOOTH REGION**

(71) Applicant: RWTH Aachen University, 52062 Aachen (DE)
(72) Inventor: VOLLBORN, Thorsten, 52066 Aachen (DE); CHUEMBOU PEKAM, Fabrice, 52080 Aachen (DE); HABOR, Daniel, 52066 Aachen (DE); RADERMACHER, Klaus, 52222 Stolberg (DE); HEGER, Stefan, 69198 Schriesheim (DE); TINSCHERT, Joachim, 52066 Aachen (DE)
(74) Representative: Eisenführ Speiser

(57) **Abstract**

The invention relates to an intraoral scanning device (1) for recording ultrasound scan data in the mouth of the patient, the device comprising: a housing (2) having a proximal portion (4) and a distal portion (6), the distal portion (6) being adapted for placement within the patients mouth; a high frequency sonic head (20) comprising at least one transducer (36) for scanning a covered or non-covered tooth region (90) or residual tooth region (92) and mounted within the distal portion (6) of the housing (2), and means for applying excitation signals to the sonic head (20) in order thereby to produce an ultrasonic wave which passes over at least part of the tooth region (90) or residual tooth region (92) such that the sonic head (20) receives ultrasonic waves reflected by the tooth region (90) or residual tooth region (92) to be scanned. The sonic head (20) is movable at least in a first and a second degree of freedom, and by a drive assembly (22) arranged within the proximal portion (4) of the housing (2) for driving the sonic head (20) in the first and second degree of freedom such that the sonic head (20) is movable in a plane for applying the ultrasonic wave to a pre-determined region of the tooth region or residual tooth region.

## Description

The invention relates to an intraoral scanning device for recording ultrasound scan data in the mouth of a patient, comprising a housing having a proximal portion and a distal portion, the distal portion being adapted for a placement within the patient's mouth, a high-frequency sonic head comprising at least one transducer for scanning a covered or non-covered tooth region or residual tooth region and mounted within the distal portion of the housing, and means for applying excitation signals to the sonic head in order thereby to produce an ultrasonic wave which passes over at least a part of a tooth region or residual tooth region such that the sonic head receives ultrasonic waves reflected by the tooth region or residual tooth region to be scanned. Moreover the invention relates to a method suitable for processing the ultrasound scan data recorded by the intraoral scanning device.

One of the main steps of the design process of dental prosthetics such as crowns, bridges, etc., consists of taking an impression of the prepared dental region. The conventional method is to perform it manually using elastomer casting compounds. Despite the fact that it is time-consuming and error-prone, it is still the present gold standard. Indeed, blood, saliva, air bubbles or other particles can displace the elastomer material and thus decrease the quality of the impression significantly.

Taking an impression of the prepared dental region requires drying the area around the prepared dental region, so that saliva and other body fluids do not distort the impressioning result. When the preparation is deep, it might be necessary to remove gingiva by means of retraction cords or even by means of electrotome. This is painful and might cause serious problems.

When a silicon impression is used, this one is used as a mold for a plaster model, on which the crowns, bridges etc. are prepared in a dental laboratory. Also in these manufacturing steps failures may occur, which distort the accuracy of the fit of the prosthesis.

Both the need for long-time reliable restorations in the posterior region and the increased demand for aesthetic dental replacements in the anterior region has led to the development of aluminum and zirconia oxide ceramics which are nowadays used in dental restoration. These ceramics are difficult to manufacture and require the use of CAD/CAM technologies. It is an ongoing process to eliminate failure sources in the production process and to facilitate chairside manufacturing of the restoration, which reduces time and costs and provides comfort for the patient.

In this regard methods are used which use optical measuring technology to sample the surfaces of the prepared tooth region and which scan the mouth of the patient to provide a 3D data model which can be used in CAD/CAM production processes. These methods can be divided into two different approaches: In one approach, a silicon or plaster model is produced, which is then extraorally scanned. Alternatively, also intraoral scanners have been developed which do not require the separate impression taking via a silicon model.

Even though a plurality of these systems has been developed in the past, there is still the need to provide improved systems which further reduce failure sources and are more easy to use by the dentist. In particular, it is required to also record subgingivally located portions of the tooth, which is in particular difficult when covered with blood or saliva.

From EP 2 023 849 a device for recording ultrasound scan data in the mouth of the patient is known, which comprises an ultrasound recorder and a support structure. The ultrasound recorder is mounted at rest by the support structure and comprises ultrasound deflection means which are movable. A coupling body is provided, wherein the coupling body is arranged between the ultrasound deflection means and the tooth region or residual tooth region to be scanned when the support structure is placed in the mouth of the patient together with the ultrasound recorder. Moreover, means for applying excitation signals to the ultrasound recorder are provided as well as means for moving the ultrasound deflection means in order thereby to produce an ultrasound wave which passes over at least a part of the tooth region or residual tooth region. EP 2 023 849 furthermore discloses a corresponding method for recording ultrasound scan data in the mouth of a patient by means of the disclosed ultrasound recorder. The method comprises the steps of: placing the support structure for holding the ultrasound recorder into the mouth of the patient, wherein the ultrasound recorder is at rest in relation to the tooth region or residual tooth region while ultrasound scan data is recorded, applying excitation signals to the ultrasound recorder in order to produce an ultrasound wave, moving the ultrasound deflection means in such a way that the ultrasound wave passes over at least one tooth region or residual tooth region, recording waves reflected at the tooth region or residual tooth region by means of the ultrasound recorder or by means of a separate ultrasound receival and providing corresponding reflection signals, making the excitation signals and reflection signals available to an evaluation unit and producing a data record by means of the evaluation unit from the excitation signals and reflection signals with the data record being suitable for transmission to a processing system or an image producing system.

Moreover, ultrasound transducers for use in the medical field are e.g. known from US 8,308,645 and US 7,255,678. Both documents disclose a scan system which uses single transducers which are moved on a circular path by means of a voice coil drive. According to US 8,308,645, an ultrasonic scan head includes an encoder, a pivot, a voice coil motor, and a transducer. The encoder includes a fixed element and a rotary element. The rotary element is disposed at the fixed element and capable of rotating about a first axis. The pivot is through the encoder and capable of rotating with the rotary element. The pivot extends along a second axis and has a first end and a second end opposite to the first end. The voice coil motor includes a stator and a mover. The first end of the pivot is connected to the mover. The mover is capable of moving linearly along a third axis. The first axis, the second axis, and the third axis are substantially perpendicular to each other. The transducer is disposed at the second end of the pivot and capable of emitting an ultrasonic wave. US 7,255,678 discloses a system for producing an ultrasound image, which comprises a scan head having a transducer capable of generating ultrasound energy at a frequency of at least 20 MHz, a processor for receiving ultrasound energy and for generating an ultrasound image at a frame rate of at least 15 frames per second.

Moreover, US 6,551,245 discloses a scan system having a rotational mechanism as well as a pivot mechanism for the transducer. Therefore a scanning movement of the transducer perpendicular to a piezo element is facilitated while at the same time pivoting the transducer is possible. This ultrasonic probe includes a scan mechanism which consists of a rotating mechanism and a swiveling mechanism. The rotating mechanism is designed to rotate a cylindrical holder having installed thereon a piezoelectric element which emits an ultrasonic wave and receives the echo. The swinging mechanism is designed to swing a rotary base which supports the rotating mechanism to swing the cylindrical holder about an axis of rotation extending perpendicular to that of the piezoelectric element.

In a further approach, an array of transducers is used and the array is moved perpendicular to the plane of the array, wherein the recorded ultrasound scan data is constructed to a 3D data set after the scan process. Such a device is disclosed, for example, in US 5,152,294. The disclosed scanner has a scanner case which encases an array transducer unit. Further, at the end bottom portion of the transducer unit there is provided an array transducer composed of a plurality of transducer elements arranged in line one after another. The electronic scanning of this array transducer produces a two-dimensional scanning plane. In addition, a swinging mechanism is provided for mechanically swinging the transducer unit in a direction normal to the arrangement direction of the transducer elements. This mechanical swing movement of the transducer unit shifts the two-dimensional scanning plane to a direction normal thereto, thereby forming a three-dimensional data acquisition area within the living body in which the ultrasonic scanner is used. The swing angle of the transducer unit is detected by an angle detector.

From US 6,050,821 a method and apparatus for mapping the structure and topography of dental formations such as periodontium and teeth is known. The apparatus uses a rail-type frame for guiding an ultrasonic array. The ultrasonic array, however, is a low frequency array with a frequency lower than 20 MHz. In practice, it has shown that such frequency levels do not provide sufficient accuracy when the data is not post-processed in a special way. In particular, the apparatus for mapping the surface of the dental structure within the oral cavity comprises: a transducer array consisting of a plurality of transducers for emitting and detecting ultrasonic pulses, including reflected echoes; a housing means to enclose and guide said transducer array over and around the dental structure; articulating means for exposing the transducer array to all aspects of the surface of the dental structure; an electrical power source for exciting the transducer array; a power source for activating the movement of the articulating means; and an amplification means for enhancing the ultrasonic echo pulse signals and a computing means for converting the electronic echo pulse signals into an interpretable recreation.

From US 2010/0210943 A1 a system is known, which includes a transducer configured to transmit a series of ultrasonic signals at a plurality of corresponding locations along a jaw and receive a plurality of echo signals; and an imaging system controller configured to obtain a plurality of echo signal data and a plurality of transducer positions, where each echo signal data corresponds to one of the plurality of transducer position. Moreover, a method is disclosed including transmitting a series of ultrasonic signals at a plurality of corresponding locations along a jaw; receiving a plurality of echo signals; obtaining a plurality of echo signal data and a plurality of corresponding transducer positions; and reconstruct image data of a portion of the jaw for display on a display device based upon the obtained echo signal data and corresponding transducer positions. A similar system is also disclosed in US 9,039,621 B2.

A drawback of all these known optical devices is that they are not suited to intraorally record geometries of a tooth region or residual tooth region without requiring a specific preparation of the gingiva as well as a cleaning and drying of the tooth region or residual tooth region. Known ultrasonic systems have generally the drawback that they do not provide 3D-surfaces in sufficient quality to use them in producing dental restorations. Moreover, it has been recognized that the accuracy of the recorded acoustic raw-data, the systems' size and design as well as the application process in clinical workflow still need to be improved significantly for intraoral dental scanning.

In general, ultrasound scan data recording accuracy can be improved by means of using a high resolution transducer in the sonic head which makes use of frequencies above 40 MHz. However, such transducers have a fixed and very limited focus range, which is smaller than 400 µm and which makes it difficult to record the complex surfaces of a tooth or residual tooth region with a high depth of focus.

One possibility to improve the depth of focus would be to mechanically move a transducer. This, however, results in mechanically complex designs, which are known to have drawbacks when used in a private dental practice. Alternatively, it is known to use signal processing methods, e.g., the synthetic aperture focusing technique (SAFT). This method has been used in the ultrasonic area with a multi-transducer system, as disclosed e.g. in US 5,186,177, US 8,157,739 and WO 2011/092718. For use with a highly focusing single transducer a new variant of the SAFT method has been developed, which is called VSAFT and which is based on the assumption that the focal point of the single transducer can be viewed as a virtual acoustic point source of a spherical wave (see, for example, Frazier G. and O'Brien W., "Synthetic aperture technique with a virtual source element", IEEE Trans Ultrason Ferroelect Freq Contr, Vol. 45, No. 1, 1998, pages 196 to 207, or Chuembou, P. et al., "Sensitivity analysis of synthetic aperture focusing based on the virtual source point for high-frequency ultrasound imaging", IEEE International Ultrasonics Symposium, 2012).

Another problem associated with the recording of 3D high frequency ultrasound scan data is the 3D reconstruction of the single recorded data sets such that they are usable in a CAD/CAM system. Known methods use pixel- and region-based approaches, which are however not usable with the fragmented and noisy data sets, so that the high demands on accuracy cannot be met.

It is therefore an object of the present invention to provide an intraoral scanning device and an associated method in order to allow for a recording of ultrasound scan data in high quality and with high accuracy while the same time facilitating chairside recording of the ultrasound scan data in an simple manner.

The above-mentioned problem is solved with an intraoral scanning device of the type mentioned in the introductory portion, wherein the sonic head is movable at least in a first and a second degree of freedom, and comprising a drive assembly arranged within the proximal portion of the housing for driving the sonic head in the first and second degree of freedom such that the sonic head is movable in a plane for applying the ultrasonic wave to a pre-determined region of the tooth region or residual tooth region.

The intraoral scanning device is formed as a handheld device. The housing comprises a distal portion which is to be placed inside the patient's mouth when a recording process is carried out. Preferably the distal portion of the housing is formed such that the patient may bite on it for fixing the intraoral scanning device during data acquisition. The high frequency sonic head is mounted within the distal portion of the housing and, thus, is adjacent to the tooth region or residual tooth region to be scanned during the recording process. This sonic head is moved by the drive assembly in the first and second degree of freedom such that the sonic head is moved in a plane over the tooth region or residual tooth region to be scanned. Therefore, it is possible to use a single transducer even though also an array could be used within the scope of the invention. The benefit of an array, in general, is that it is not necessary to move it in a plane, because it consists of a plurality of transducers. On the other hand, a high-frequency single transducer has the benefit that it has a high focus in depth and, thus, can record ultrasound scan data with high accuracy. Additionally, single transducers are more cost effective than transducer arrays. The transducer is preferably adapted to transmit ultrasonic waves with a frequency in the range of 20 to 100 MHz, preferably 40 to 100 MHz, more preferably 40 to 60 MHz.

While the distal portion and the transducer are adapted for placement within the patient's mouth, the proximal portion of the housing preferably comprises a handle so that an operator can hold and place the housing to position the sonic head for a recording operation. Preferably the patient fixes the distal portion by biting. Alternatively, an additional fixing apparatus such as a support arm or the like is provided. The tooth region or residual tooth region to be scanned includes all dental hard and soft tissue structures, such as teeth, bone, gingiva, nerves and the like. The expression "residual tooth" refers to a part of a tooth which e.g. has already been prepared for a dental reconstruction. In the following, when reference is made to a "tooth" or a "residual tooth", it shall be understood that both is meant, even though only one term is used. When reference is made to a "covered tooth region" or "covered residual tooth region", this means that the tooth region or residual tooth region is covered with soft tissue, e.g., gingiva, saliva, blood, or sulcular fluids. The term "uncovered tooth region" refers to the tooth or bone itself.

Preferably, the intraoral scanning device comprises or is connected to a processing unit for processing the recorded ultrasound scan data for enhancing their depth of focus and/or for reconstructing a 3D model. The processing unit may be provided within the housing, preferably, in the distal portion. In a preferred embodiment, the processing unit is provided external to the housing and connected to the housing, in particular, to the sonic head, via a cable or wireless. In a preferred solution the processing unit is provided as a separate unit on a movable support device, such as a roller carriage. The processing unit is preferably arranged as close as possible to the sonic head, such that damping and noising of the recorded signal is reduced by a short wiring between the sonic head and the processing unit. In one embodiment, the processing unit is provided in a separate housing which might be provided at a head rest of a dental chair when the intraoral scanning device is used. Alternatively, the patient may hold this controller housing in his hands during the scanning process.

According to a first preferred embodiment of the invention, the intraoral scanning device comprises an intraoral interface structure having a coupling medium for arrangement between the sonic head and the tooth region or residual tooth region to be scanned when the intraoral interface structure is placed in the mouth of the patient together with the sonic head. The coupling medium may comprise or consist of an impedance matching medium having low damping characteristics. The intraoral interface structure is used to keep the coupling medium, which typically is liquid having, however, a relatively high viscosity in place. The coupling medium should be provided around the tooth region or residual tooth region to be scanned during a scan process. The coupling medium is used for impedance matching such that an energy-loss in the acoustic wave transmission is minimized. For recording high quality and high accuracy ultrasound scan data, it is important that the ultrasonic wave transmitted from the transducer is irritated as less as possible by any medium between the transducer and the tooth region or residual tooth region to be scanned. This increases the accuracy of the recorded ultrasound scan data.

In a further preferred embodiment, the first degree of freedom is a translational degree of freedom along a first translational axis and the second degree of freedom is a rotational degree of freedom about a second rotational axis, wherein the center of rotation is offset from the sonic head. By means of the second degree of freedom, the sonic head is movable along a circular path. The radius of this path is large compared to the length of the circular path. The circular path is displaceable along the first degree of freedom, which is preferably arranged perpendicular to the circular path, thus in a radial direction. Small increments in a step width are important, preferably about 1,5 x λ, in particular 0,5 x λ, wherein λ is the wavelength of the incorporated ultrasonic wave within the respective working medium, e.g., the above mentioned coupling medium. According to this specific arrangement of the two degrees of freedom with the first and the second axis, the sonic head can be moved in a plane and reach virtually every point in this plane. Therefore it is possible to record ultrasound scan data over the whole plane.

In an advantageous development of the invention, the sonic head is movable in a third rotational degree of freedom, preferably about a third rotational axis, which is perpendicular to the second axis. In a first alternative, the third axis is perpendicular to the first axis. In a second alternative, the third axis is parallel, in particular identical to the first axis. This third degree of freedom is used for swiveling the sonic head. The axis preferably runs through the sonic head or at least adjacent to the sonic head in closed proximity. It is beneficial that the sonic head is not only able to transmit ultrasonic waves perpendicular to the plane, which is defined by the first and the second degree of freedom, but also in an acute angle. This helps to view side portions of the tooth region or residual tooth region to be scanned and to fully record the shape of the tooth region or residual tooth region. The accuracy of the recorded ultrasound scan data can greatly be improved in this embodiment.

Alternatively, or additionally, the sonic head comprises two or more, preferably three, transducers which are arranged along an actuator path and angled to each other. In one embodiment, only a subgroup of the transducers, e.g. one transducer, is adapted to radiate ultrasonic waves, while all are adapted to receive the reflected waves. Alternatively a separate sender is provided. In such an embodiment, in particular when three transducers are used, it is not necessary that the sonic head comprises a third degree of freedom for swiveling the sonic head. The two or three transducers are angled with respect to each other, in particular such that the foremost transducer is angled to look slightly to the back, the middle transducer is not angled and looks downward perpendicular to the plane defined by the first and second degree of freedom and the rearmost transducer is angled to look slightly to the front. Again, this embodiment is beneficial for acquiring ultrasound scan data of intradental spaces and to achieve a high data accuracy. The angle between each of the two or three transducers preferably is in the range of < 0° to 45°, in particular 5° to 25°, more preferably 10° to 20°.

Moreover, it is preferred that the drive assembly comprises a linear actuator for driving the sonic head in the first degree of freedom and a rotational actuator for driving the sonic head in the second degree of freedom. In a beneficial embodiment, the linear actuator preferably is a servo motor or stepper motor with a transmission gear, e.g., rack and pinion or spindle and nut. This is a very simple arrangement which allows accurate movement of the sonic head in the first degree of freedom while still using a mechanically simple drive assembly. The rotational actuator preferably is formed as a voice coil drive. Voice coil drives are well-known for their accuracy and are simple with respect to maintenance issues. In a further embodiment, also the linear actuator is formed by a voice coil drive.

According to a further preferred embodiment, the drive assembly comprises a rotor bar having a proximal end and a distal end, the distal end carrying the sonic head and the proximal end being connected to the rotational drive for rotating the rotor bar, so that the sonic head moves in the second degree of freedom. In this arrangement, the distal end of the rotor bar preferably is arranged in the distal portion of the housing. This also allows to use the leverage effect of the rotor bar when driving the sonic head. Accuracy of the positioning of the sonic head is therefore improved.

According to a further preferred embodiment, the linear actuator is coupled with the rotational actuator for moving the rotational actuator along the first axis. The rotational actuator according to this embodiment may be provided with a frame and the frame is connected to the linear actuator or the linear actuator is coupled to the rotational actuator via the rotor bar or a telescopic rotor arm. When the rotor arm is formed as a telescopic rotor arm, the linear actuator preferably is formed as a telescopic drive, so that the length of the rotor arm can be varied to drive the sonic head in the first degree of freedom. When the rotational actuator is provided with a frame, the frame carries the linear actuator which again might be formed as a servo motor or stepper motor with a transmission gear, e.g., rack and pinion or spindle and nut. In this embodiment, also the linear actuator is rotated by means of the rotational actuator and the actuators together form a serial kinematic.

In a further preferred embodiment, the distal portion of the housing is separated and sealed from the proximal portion, wherein the distal portion of the housing is filled with coupling medium. The sonic head is thus arranged and moved within the coupling medium which is preferably the same or similar to the one which is provided in the above-mentioned embodiment within the intraoral interface structure. The coupling medium thus facilitates low damping acoustic wave transmission. Filling the distal portion with the coupling medium helps to avoid differences of the transmission medium between the sonic head and the tooth region or residual tooth region to be scanned and thus helps to improve the recording accuracy.

It is preferred that the rotor bar protrudes a sealing membrane separating the proximal and distal portions of the housing. Preferably, the center of rotation of the rotor bar in this embodiment is arranged in the proximal portion. The sealing membrane is preferably formed such that it allows for the rotational and translational movement of the rotor bar. The membrane may comprise a bellow portion or the like, allowing such a movement without corrupting the sealing effect. Wiring from the sonic head runs preferably within the rotor bar, in particular in a groove which may additionally be covered by a covering medium, to seal it against the coupling medium. The membrane is flexible and separates the proximal from the distal portion of the housing. The proximal portion of the housing is not filled with coupling medium, but is rather filled with air or any other gas, preferably inert gas. This allows to keep the linear and the rotational drive and also optional electronic control units dry. Therefore, the construction of the intraoral scanning device is simplified.

According to a further preferred embodiment, the device comprises an acoustic window in the distal portion of the housing such that ultrasonic waves can pass through the acoustic window. The acoustic window preferably is formed out of a material having the same or similar characteristics in damping and impedance as the coupling medium, such that the acoustic window is substantially invisible for the sonic head, in particular, the transducer. Therefore, recording accuracy increases, since the ultrasonic waves are less deflected by the acoustic window.

Preferably, the acoustic window is supported and tightened or stretched by means of a frame element attached to or formed integral with a portion of the housing. The acoustic window might be formed out of a thin foil material which allows the acoustic waves to pass through it without substantially damping or deflecting the ultrasonic waves. By means of the frame element, the position of the acoustic window is clearly defined and known with respect to the ultrasonic head. The known geometrical relationship between the acoustic window and the ultrasonic head allows to take into account the acoustic window when processing the recorded ultrasound scan data. Moreover, the frame element biases the acoustic window and thus avoids that wrinkles or the like are present in the acoustic window. The acoustic window is kept flat and not bended or the like. Moreover, such a frame element helps to avoid the risk of destroying the acoustic window when the intraoral scanning device hits against hard elements, such as the tooth region or residual tooth region.

In a preferred development, the intraoral scanning device comprises a cover for the acoustic window covering the acoustic window in a closed state and being manually or automatically openable for giving free the acoustic window before a recording process. The cover thus protects the acoustic window from coming into contact with any other elements. Protecting the acoustic window helps to improve the recording accuracy. The acoustic window is protected from being scratched or destroyed and therefore the recording accuracy is improved. The cover can be formed as a slideable or pivotable lid or door which can be moved from an open to a closed position and vice versa. The cover is preferably biased into the closed position. For example, it can be automatically pushed into the open position, when the intraoral scanning device is coupled to the intraoral interface structure. In an alternative, the cover is automatically opened when a recording process is started. Thus, as long as no ultrasonic waves are transmitted by the transducer the cover preferably stays closed, and is opened when the recording process is started.

In a further preferred embodiment, the intraoral scanning device comprises at least one displacement sensor for measuring the position of the sonic head. Such a displacement sensor allows to implement a feedback routine for measuring the exact position of the sonic head which, again, improves the recording accuracy.

Preferably, the displacement sensor is arranged in the proximal portion of the housing. Thus, the displacement sensor is arranged in the dry area which is not filled with coupling medium. Preferably, the displacement sensor is arranged at a sensor arm, extending from the rotor arm in an opposite direction of the sonic head. Such a sensor arm can therefore act as a measurement amplifier which allows more for a accurate position sensing. Positioning the displacement sensor in the proximal portion also reduces the needed wiring and the wiring does not need to run through the optional membrane. Moreover, the sensor can be easily integrated. The displacement sensor preferably comprises an active part and a passive part, wherein the passive part comprises a scale. The passive part preferably is arranged at the rotor or other movable parts while the active part, which may act optically or magnetically, is located at a fixed location within the housing.

Furthermore it is preferred that the housing comprises a substantially rigid base plate which carries the drive assembly and runs from the distal portion to the proximal portion. This base plate may be formed out of a metal material and provides structural support for the drive assembly. The rest of the housing of the scanning device can be formed out of a plastic material which is more cost effective and allows for a great variety of geometry. The acoustic window preferably is formed in the base plate.

According to a second aspect of the invention, a method is provided which is suitable for processing the ultrasound scan data recorded by the intraoral scanning device according to at least one of the aforementioned preferred embodiments of an intraoral scanning device according to the first aspect of the invention. In order to speed up the processing, the method determines portions of the ultrasound scan data in proximity to surfaces of the tooth region or residual tooth region. In a subsequent step, a synthetic aperture focusing technique (SAFT) is then applied only to the determined portions in order to enhance the depth of focus of the ultrasound scan data in the determined portions. Since the SAFT method, which is generally quite complex and computationally expensive, is only applied to the portions of the ultrasound scan data in proximity to surfaces of the tooth region or residual tooth region, the amount of ultrasound scan data to be processed can be reduced, resulting in a corresponding reduction of processing time.

In a first variant, the determination is preferably achieved by extracting from the ultrasound scan data an upper envelope and a lower envelope of the surfaces of the tooth region or residual tooth region based on the amplitude of the ultrasound scan data and by determining the portions of the ultrasound scan data in proximity to surfaces of the tooth region or residual tooth region based on the upper envelope and the lower envelope. For example, the ultrasound scan data can be processed on a slice-by-slice basis, wherein each slice can be analyzed in order to determine in each column of the slice a first and a last position at which the amplitude of the ultrasound scan data exceeds a pre-defined threshold value. The first position can then be regarded as forming part of the upper envelope and the last position can be regarded as forming part of the lower envelope. The totality of all first and last positions of all columns in all slices then forms the upper envelope and the lower envelope, respectively. This approach allows extracting the positions forming the upper envelope and the lower envelope with only a very simple and fast one-dimensional processing.

The threshold is preferably pre-defined such that the amplitude of the ultrasound scan data only exceeds the threshold value at an interface between different materials, e.g., at the interface between the coupling medium and the tooth region or residual tooth region or, if the tooth region or residual tooth region is covered with soft-tissue, e.g., gingiva, saliva, blood, or sulcular fluids, between the soft-tissue and the tooth region or residual tooth region. Where the tooth region or residual tooth region is not covered with soft-tissue, the upper envelope substantially corresponds to the surface of the tooth or residual tooth itself, whereas in covered regions it substantially corresponds to the top surface of the soft-tissue. In contrast, while the lower envelope also substantially corresponds to the surface of the tooth or residual tooth itself where the tooth region or residual tooth region is not covered with soft-tissue, in covered regions it substantially corresponds to the bottom surface of the soft-tissue. It is noted, however, that due to the limited depth of focus the extracted upper and lower envelopes can somewhat deviate from the true surfaces of the tooth region or residual tooth region. For example, the upper envelope and the lower envelope may not perfectly meet at the surface of the tooth or residual tooth where the tooth region or residual tooth region is not covered with soft-tissue.

Preferably, the portions of the ultrasound scan data in proximity to surfaces of the tooth region or residual tooth region are determined as the portions of the ultrasound scana data between the upper envelope and the lower envelope, wherein an additional "safety margin" can optionally be added on either side. The SAFT method is then only applied to the portions determined in this way, which may greatly reduce the processing time. For instance, when the columns of the ultrasound scan data are represented as one-dimensional arrays resp. images of e.g. 3000 pixel height, the size of the portion between between the upper envelope and the lower envelope can e.g. be in the range of about 300 pixel where the tooth region or residual tooth region is covered with soft-tissue and even much smaller in uncovered regions.

It shall be noted that the above-described processing can be preceeded by additional processing steps, such as a noise suppression, e.g., by means of a suitable filtering. Moreover, in order to improve the robustness of the approach, it can additionally be performed in other directions through the ultrasound scan data, i.e., in directions that are at an angle with the columns described above. It shall further be noted that the description, here, assumes a representation of the ultrasound scan data in which the occlusal surface of a tooth or residual tooth is located more at the top of the ultrasound scan data than the remaining parts thereof. A person skilled in the art can understand how the description would have to be changed if the representation of the ultrasound scan data would be different, e.g., if the occlusal surface of a tooth or residual tooth would be located more at the top of the ultrasound scan data than the remaining parts thereof.

In a second variant, which can be used as an alternative to the first variant or combined therewith, the determination of the portions of the ultrasound scan data in proximity to surfaces of the tooth region or residual tooth region is preferably achieved by applying a pre-defined sleeve model that defines a sleeve around the surfaces of the tooth region or residual tooth region to the ultrasound image data. As described before, the ultrasound scan data can be processed e.g. on a slice-by-slice basis, wherein a slice of the sleeve model - or a dedicated slice sleeve model - can be fitted to the contour formed by the surfaces of the tooth region or residual tooth region in the slice. The slice of the sleeve model or the dedicated sleeve model can also be referred to as a "tube model", since it resembles a tube that encloses the formed contour.

Preferably, a plurality of pre-defined sleeve models resp. tube models are provided in a database, wherein a model that matches the surface geometry of the tooth region or residual tooth region can be selected from the database based on the ultrasound scan data and/or additional a-priori information. For instance, the model can be selected based on the dimensions, e.g., width, length and/or depth, of one or more of the upper and lower envelopes described above. Additionally or alternatively, a-priori information about e.g. the number of teeth or residual teeth in the scanned tooth region or residual tooth region, the location of the teeth or residual teeth or the selected intraoral interface structure can be used for selecting the model. The selected model can then be applied to the ultrasound image data based on the above-described parameters / characteristics as well as the coordinates of the high frequency sonic head during the ultrasound scan. The pre-defined sleeve models resp. tube models can be determined, for instance, using statistical methods from a large number of ultrasound scans of different tooth regions or residual tooth regions.

The applied SAFT method is preferably based on the assumption that the focal point of a single ultrasound transducer can be viewed as a virtual acoustic point source of a spherical wave (VSAFT). This variant of the "original" SAFT method is particularly well suited for use with a highly focusing single ultrasound transducer and allows to obtain a resolution of the ultrasound scan data that is substantially independent of depth. The VSAFT method is preferably combined with a suitable weighting method, e.g., with the so-called "coherent factor", the "minimum variance beamforming" or an apodization window such as a boxcar window, a Hanning window or a Hann window, in order to reduce artifacts in the ultrasound scan data resulting from additional side lobes that are typically comprised by the sound field of a highly focusing ultrasound transducer.

In order to further optimize the resolution and to reduce noise, the SAFT-processed ultrasound scan data can be filtered with a plurality of frequency filter banks (e.g., in the range of 1 to 200 MHz, preferably 20 to 100 MHz). Thereafter, the filtered ultrasound scan data are demodulated in order to determine the envelope and, optionally after a suitable grayscale coding, a further noise reduction can be performed by means of an optional median filtering. In order to optimize the information content, the scanning process and the subsequent data processing may be repeated for different ultrasound directions.

In the case of subgingivally prepared teeth, the method preferably removes portions of the ultrasound scan data corresponding to soft-tissue, in particular, the gingiva, of the tooth region or residual tooth region. Therewith, ultrasound scan data that obscure the preparation border of a tooth or residual tooth to be restored can be eliminated from the data record, preferably leaving only ultrasound scan data corresponding to the actual tooth or residual tooth.

The removal can be based on a similar process as the determination of the portions of the ultrasound scan data in proximity to surfaces of the tooth region or residual tooth region described above. In particular, an upper envelope and a lower envelope of the surfaces of the tooth region or residual tooth region can be extracted again based on the amplitude of the processed ultrasound scan data. Since the depth of focus of the ultrasound scan data has been enhanced by applying the SAFT method, the extracted upper and lower envelopes will now resemble the surfaces of the tooth region or residual tooth region with a higher accuracy than before the SAFT processing. Based on the upper envelope and the lower envelope, the portions corresponding to the soft-tissue can then be identified and removed. For instance, an extend of the portions of the ultrasound scan data between the upper envelope and the lower envelope can be analyzed, wherein, when the extend exceeds a pre-defined threshold value, a portion is identified to correspond to soft-tissue, and when the extend does not exceed the pre-defined threshold value, the portion is identified to correspond to the tooth or residual tooth.

It is further preferred that the method extracts points from the ultrasound scan data corresponding to surface points of a tooth or residual tooth based on a maximum intensity projection (MIP). In doing so, it is assumed that the location of the maximum echo amplitude corresponds to a point on the surface of the tooth or residual tooth. This allows for a reliable segmentation of the surfaces of the tooth or residual tooth. This step may also comprise an additional threshold-based filtering.

The extracted points, or if multiple scans have been performed, the points extracted from each scan, are finally reconstructed to generate a three-dimensional surface reconstruction of the tooth or residual tooth. This is preferably done by fitting a model of the geometry of the tooth or residual tooth to the points. Thereby, the model, which is preferably a statistical mode of the geometry of the tooth or residual tooth, is selected in dependence of the form of the tooth to be restored. For instance, the model can be selected based on one or more of (i) the specific preparation of the tooth or residual tooth, (ii) the typ of the tooth or residual tooth (e.g., incisor or molar), and (iii) the size of the tooth or residual tooth (e.g., on a scale from 1 to 10). e, a plurality of models having different characteristics in each of these dimensions are provided in a database. The fitting preferably reduces the average distance between the extracted points and the model using, for instance, a non-rigid iterative closest point (ICP) algorithm. As an alternative to this "model fitting"-based reconstruction, the points can be interpolated based on knowledge about the tooth or residual tooth. The knowlegde, in this case, can be the same or similar to the above-described characteristic dimensions of the geometry model, i.e., the specific preparation, typ and/or size of the tooth or residual tooth. The interpolation may be two- or three-dimensional and may be based, for instance, on the known thin-plate spline robust point matching algorithm (TPS-RPM) as described e.g. in Chui H. and Rangarajan A., "A new point matching algorithm for non-rigid registration", Comput. Vis. Image Understand., Vol. 89, 2003, pages 114 to 141. Finally, it is also contemplated to combine the "model fitting"-based approach and the knowledge-based interpolation approach.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality. The wording, "a number of" items, comprises also the number one, i.e., a single item, and further numbers like two, three, four and so forth.

In the drawings:
- Fig. 1: shows a perspective partially cut-out view of the intraoral scanning device;
- Fig. 2: shows the intraoral scanning device without housing and only base plate;
- Fig. 3: shows a side view of Fig. 2;
- Fig. 4: shows a full cut through the perspective of Fig. 2;
- Fig. 5: shows a top view of Fig. 2;
- Fig. 6a: shows a top view of Fig. 2 with rotated rotor bar and rotated sonic head;
- Fig. 6b: shows a front view of Fig. 6a;
- Figs. 7a - 7c: show different arrangements of a plurality of transducers of the sonic head;
- Fig. 8: shows a schematic view of a lower jaw with the intraoral scanning device arranged within the mouth of a patient;
- Fig. 9: shows a schematic view of an intraoral interface structure arranged at a portion of the lower jaw;
- Fig. 10: shows a flowchart illustrating a method suitable for processing the ultrasound scan data recorded by the intraoral scanning device; and
- Fig. 11: shows further details of the method.

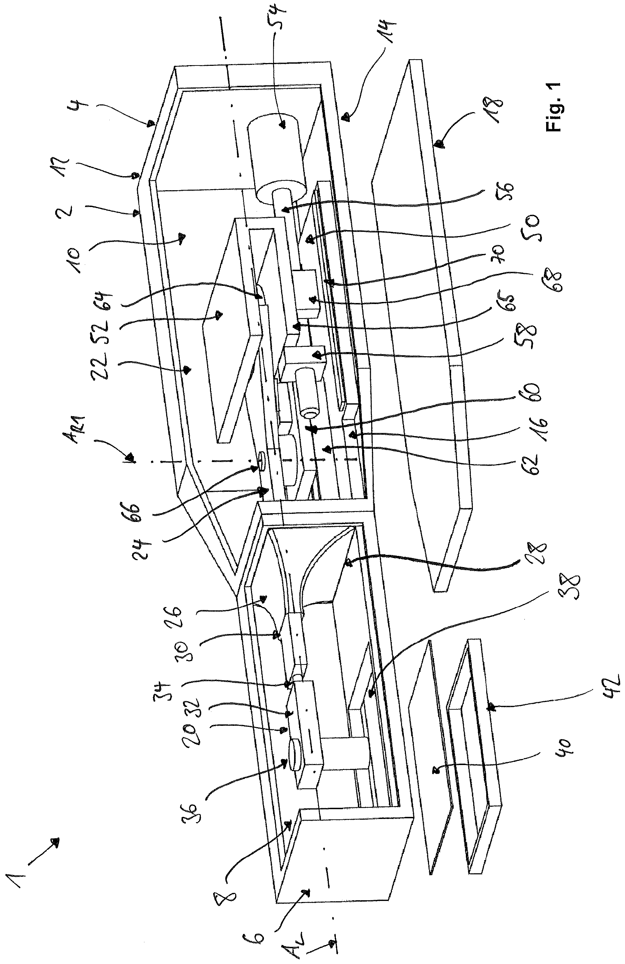

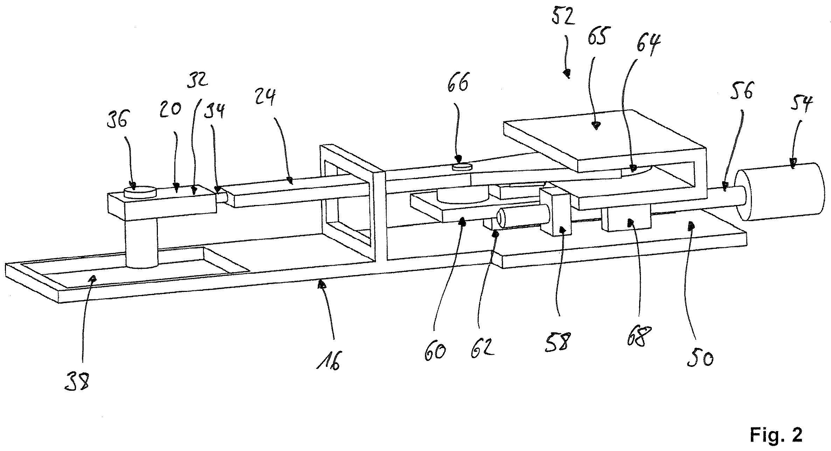

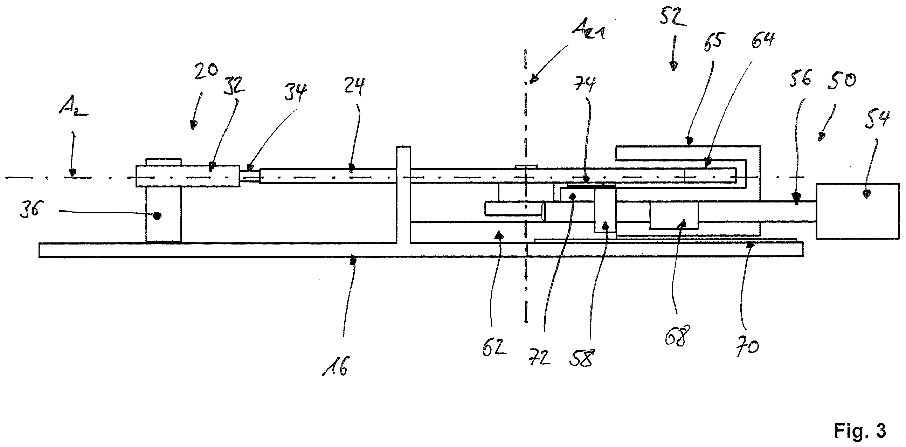

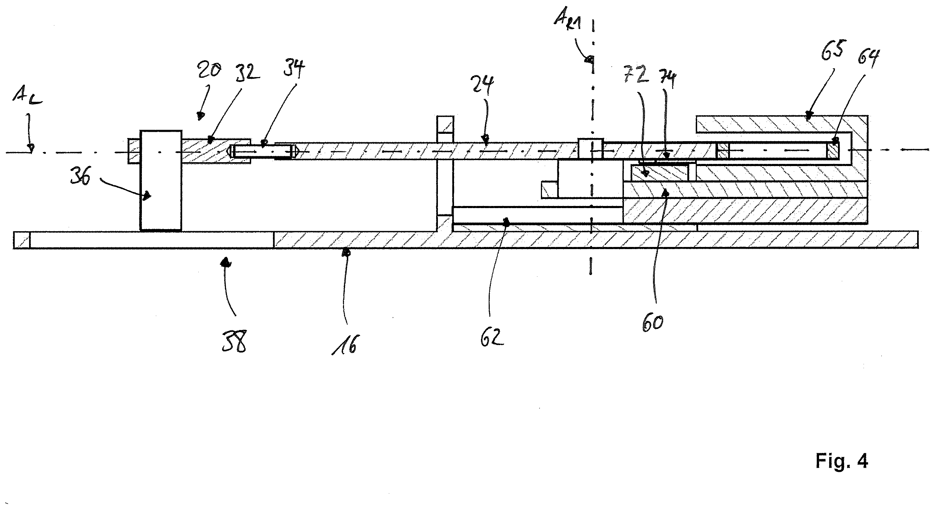

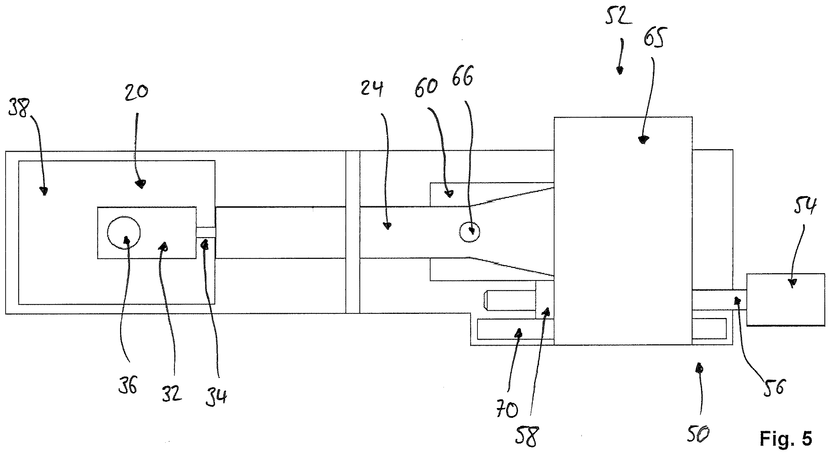

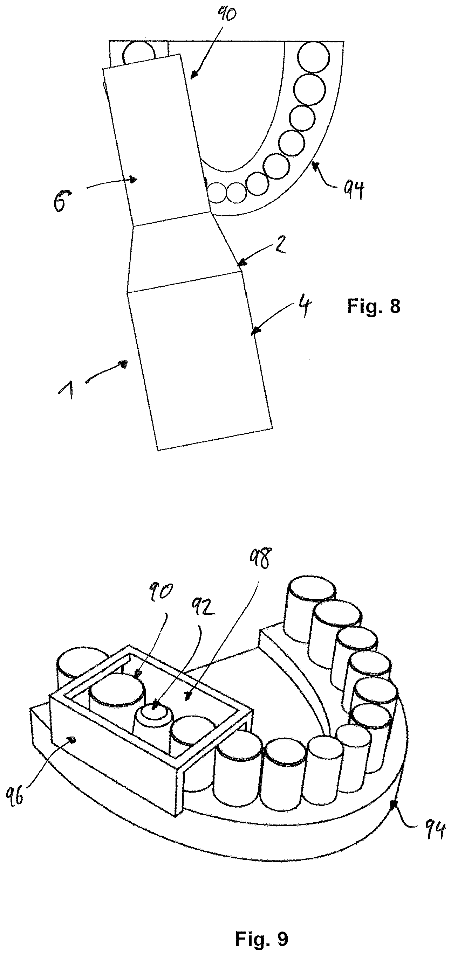

The intraoral scanning device 1 according to the invention comprises a housing 2 with a proximal portion 4 and a distal portion 6, wherein the distal portion 6 is adapted to be placed within the patient's mouth (see also Figs. 8 and 9). The housing 2 comprises a wet area 8 and a dry area 10, wherein the wet area 8 is provided in the distal portion 6 of the housing 2 and the dry area 10 in the proximal portion 4 of the housing 2. The proximal portion 4 is suited to be gripped by an operator and may comprise an additional handle or the like. With respect to Fig. 1, the housing 2 comprises an upper portion 12 and a lower portion 14, wherein the lower portion 14 is formed by a base plate 16 (see Figs. 2 to 5). The base plate 16 runs from the distal portion 6 to the proximal portion 4 of the housing 2 and provides structural support. As shown in Fig. 1, the base plate 16 within the proximal portion 4 is provided with a shielding plate 18 which might be - as well as all housing parts - formed out of a grippable rubber material, so that the operator does not have to touch a slippery metallic surface provided by the base plate, but can easily grip and handle the intraoral scanning device 1.

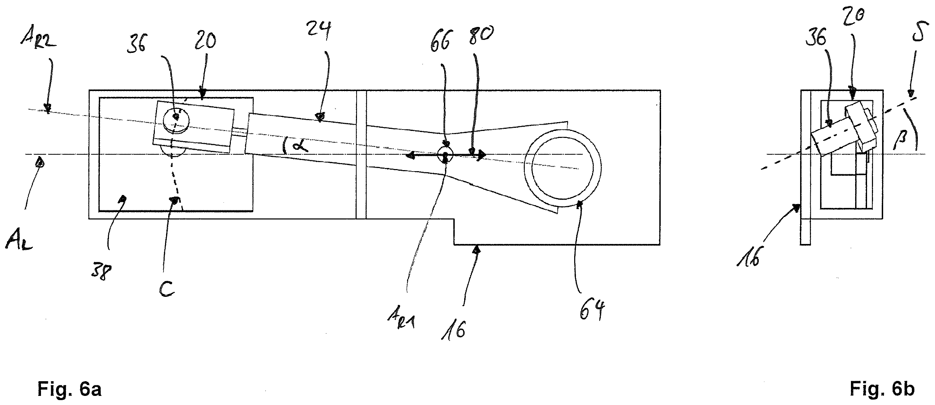

The intraoral scanning device 1 moreover comprises a high frequency sonic head 20 and a drive assembly 22 for driving the sonic head 20 in a first and second degree of freedom (see, in particular, Figs. 2 and 6a). The drive assembly 22 comprises a rotor bar 24 which is rotatable about a first rotational axis A_{R1}. The rotor bar 24 extends from the proximal portion 4 to the distal portion 6 and from the dry area 10 to the wet area 8. Moreover, the rotor bar 24 extends through a sealing membrane 26 which is provided between the distal portion 6 and the proximal portion 4 and seals the wet area 8 from the dry area 10. Membrane 26 is shown to be funnel-shaped. This is not necessary but membrane 26 could also be formed having a bellow or bag which allows lateral movement of the rotor bar 24 with respect to the housing 2 in the portion where the membrane 26 is provided, and also allows movement perpendicular to the rotational axis A_{R1} along the longitudinal axis A_{L} of the scanning device (see Fig. 6a). Membrane 26 is fixedly and sealingly connected with its outer rim 28 to the housing 2 and with its inner rim 30 to the rotor bar 24.

The sonic head 20 comprises a head body 32 which is connected via a pivotable connection 34 to the rotor bar 24. The pivotable connection 34 allows swiveling the sonic head 20 about axis A_{R2} (see Fig. 6a) which in Fig. 1 is identical with axis A_{L}. Axis A_{R2} is the longitudinal axis of the rotor bar 24. The head body 32 according to the embodiment shown in Fig. 1 carries a single transducer 36 which projects downwardly in Fig. 1. The single transducer 36 is formed as a high frequency transducer which is able to excite ultrasonic waves with a frequency of 50 MHz and is also able to receive the reflected waves.

To allow pass-through of the ultrasonic waves, housing 2 comprises an opening 38 which is formed in the distal portion 6 of the housing 2. The opening 38 is closed with an acoustic window 40 which is held in place and is biased by means of a frame 42. In Fig. 1, the acoustic window 24 and the frame 42 are shown in an exploded view but are mounted within the opening 38. The frame protects the acoustic window 40 and also biases the acoustic window 40 which is formed by a foil element having a low impedance for ultrasonic waves and matches the impedance of the coupling medium. This results in a low reflexion factor and no impedanz difference.

The drive assembly 22 is formed as a serial kinematic and comprises a linear actuator 50 for driving the sonic head 20 in a first degree of freedom and a rotational actuator 52 for driving the sonic head 20 in a second degree of freedom. The first degree of freedom is a linear degree of freedom along the axis A_{L} and the second degree of freedom is a rotational degree of freedom about the rotational axis A_{R1}. The linear actuator 50 comprises a linear motor 54 driving a spindle 56. The linear motor 54 is mounted at the base plate 16. The spindle 56 acts together with a nut 58 which is attached to a body 60 of the rotational actuator 52. The body 60 of the rotational actuator 52 is guided in a linear bearing 62 which allows linear movement of the body 60 along the linear bearing 62 defining a linear axis by means of actuating the linear drive 54. When the linear drive 54 is actuated, the spindle 56 is rotated and the nut 58 is moved back and forth along the spindle 56 and, thus, the body 60 is moved back and forth accordingly.

The rotational actuator 52 is formed as a voice coil drive. It comprises the body 60 which is substantially U-shaped in cross section and supported in the linear bearing 62 and connected to the nut 58. The rotational actuator 52 comprises a coil 64 which is supplied with current for inducing an electromagnetic field (see Fig. 6a) and a corresponding magnetic field generated by a ferromagnetic circuit 65 having neodymium magnet, provided within the body 60. The coil 64 is fixed to the rotor bar 24 which is supported on a rotational bearing 66 rotatable about axis A_{R1}. The bearing 66 is carried by the body 60. The body 60 thus carries the bearing 66 and the ferromagnetic circuit 65.

The rotational actuator 52, in particular the ferromagnetic circuit65 is provided with a sensor 68 which is movable together with the rotational actuator relative to the base plate 16. The base plate 16 is provided with a scale 70 which is read by the sensor 68.

A second sensor 72 is provided on the body 60 of the rotational actuator 52 and reads a scale 74 which is attached to the rotor bar 24. By means of the two sensors 68, 72, the position of the sonic head 20 can be measured.

As can be inferred from the figures, the section of the rotor bar 24 from the sonic head 20 to the bearing 66 is longer than the section from the bearing to the coil, preferably by 10% to 50%. This arrangement helps to reduce the velocity of the active in respect to the passive element of the rotational encoder 68, 70 leading to a robust position measurement. Repeatability in view of positioning the sonic head 20 is important. Alternatively, when the rearward section of the arm 24 is longer, or the encoder 68, 70 is placed in the distal portion of the housing 2, the arm 24 provides a leverage effect and thus acts as a measurement amplifier.

With respect to Figs. 6a and 6b the movement of the sonic head 20 will be described. As mentioned above, the sonic head 20 is connected via the rotor bar 24 to a linear actuator 50 and a rotational actuator 52. The rotational actuator 52 is mounted on the linear actuator 50 and movable by means of the linear actuator 50. In Fig. 6a a top view of the rotor bar 24 including the coil 64 for the voice coil drive of the rotational actuator 52 is shown. The other elements (in particular, the linear actuator 50) are not shown in Fig. 6a for clarity reasons (see in particular Figs. 1 to 5).

The rotor bar 24 is rotatable about axis A_{R1} which is facilitated by the bearing 66. Bearing 66 is supported on the body 60, which is movable by means of the linear actuator 50 in the direction of the two-headed arrow 80 shown in Fig. 6a. By means of the rotational actuator 52 the rotor bar 24 is rotatable about axis A_{R1} which is indicated by angle α in Fig. 6a. According to Fig. 6a the rotor bar 24 is slightly moved upwards about angle α. Therefore, by rotating the rotor bar 24 about axis A_{R1} the sonic head 20 can be moved along semicircular paths C (in Fig. 6a only one indicated). In operation the sonic head 20 will be moved along one of the circular paths C to inspect the tooth region or residual tooth region and after the respective semicircular path has been passed, the linear actuator 50 will be controlled to move the rotor bar 24 into the direction of axis A_{L} in a small step, preferably 0.5 x λ, wherein λ is the wavelength of the sonic waves transmitted by the transducer 36. By subsequently actuating the linear actuator 50 and the rotational actuator 52, substantially the whole area defined by the opening 38 in the base plate 16 can be scanned.

In a preferred embodiment the sonic head 20 additionally is rotatable or swivable about axis A_{R2}, which is the longitudinal axis of the rotor bar 24. Also this embodiment is shown in Figs. 6a and 6b. In particular, the front view in Fig. 6b which is a view from the front left hand side of Fig. 6a indicates this. The transducer 36 comprises a line of sight S defining a direction of wave propagation indicating the direction of the transmitted ultrasonic waves. According to Fig. 6b the sonic head 20 and thus also the transducer 36 is slightly angled to the side by angle β. In such an orientation the sonic head 20 is able to better scan gaps between teeth, and in particular the oral and vestibular surfaces of a tooth region or residual tooth region to be scanned. For swiveling the sonic head 20 an additional actuator may be provided.

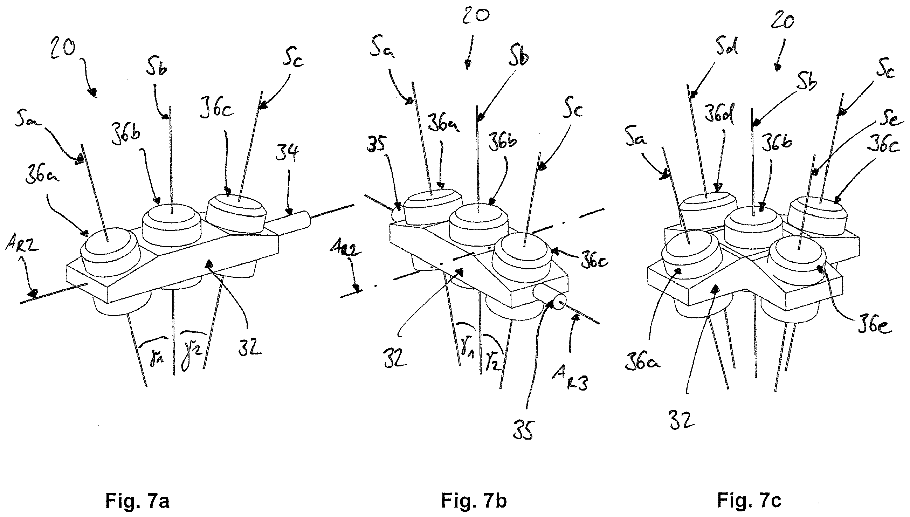

Additionally or alternatively the sonic head 20 may comprise two or more transducers as shown in Figs. 7a to 7c. According to Fig. 7a the sonic head 20 comprises three transducers 36a, 36b, 36c (in total designated with 36) each transducer 36a to 36c has a line of sight Sa, Sb, Sc. The lines of sight Sa to Sc are arranged in a plane which also includes the axis A_{R2}. Again, the head body 32 may be connected via a swivel hinge 34 to the rotor arm 24 as described with respect to Figs. 1 to 6b and thus rotatable about the axis A_{R2}. The lines of sight Sa, Sb, Sc according to Fig. 7a are angled to each other wherein the lines of sight Sa and Sb include an angle γ₁ and the lines of sight Sb and Sc include an angle γ₂ and angles γ₁ and γ₂ are identical in this embodiment. In this arrangement, transducer 36a looks slightly backwards towards the proximal portion 4 of the housing 2 when mounted in the intraoral scanning device 1 as described above, transducer 36b is arranged identical to transducer 36 according to Figs. 1 to 6b and transducer 36c slightly looks to the front. All transducers 36a, 36b, 36c together might be swiveled as it has been described with respect to Figs. 6a and 6b above. According to such arrangement, in particular gaps between tooth regions or residual tooth regions to be scanned can be recorded in an improved manner.

Alternatively, three transducers 36a, 36b, 36c are arranged as shown in Fig. 7b. Again, the transducers 36a, 36b, 36c are angled to each other such that the lines of sight Sa, Sb, Sc define angles γ₁ and γ₂ as has been described with respect to Fig. 7a. However, the plane which includes the lines of sight Sa, Sb, Sc is perpendicular to axis A_{R2}. In such an embodiment it is not necessary to swivel the transducers 36a, 36b, 36c about the axis A_{R2} as has been described with respect to Fig. 7, since the outermost transducers Sa and Sc are angled and are able to record side portions of the tooth region or residual tooth region to be scanned, as it has been described with respect to Fig. 6b. However, the sonic head 20 as shown in Fig. 7b is rotatable about a third axis A_{R3}. For allowing this movement, the head body 32 is provided with two support extensions 35 receivable at a corresponding support at the rotor bar 20. Such a support may be fork-shaped.

In yet a further preferred embodiment, the arrangements of Fig. 7a and 7b are combined. Such an embodiment is shown in Fig. 7c. The sonic head 20 according to Fig. 7c comprises five transducers 36a, 36b, 36c, 36d, 36e. The transducers 36a, 36b and 36c are identically arranged to the embodiment shown in Fig. 7a and reference is made to the above description with respect to Fig. 7a. Transducers 36d and 36e are arranged identical to transducers 36a and 36c of the embodiment shown in Figs. 7b and reference is made in so far to the above description of Fig. 7b. In the embodiment shown in Fig. 7c it is not necessary to swivel the sonic head 20. Due to the four additional transducers compared to the embodiment shown in Fig. 1 it is possible to record and scan gaps between tooth regions and residual tooth regions as well as side portions of tooth regions and residual tooth regions in an improved and easy manner.

Figs. 8 and 9 illustrate the usage of the intraoral scanning device 1 for scanning a tooth region 90 or residual tooth region 92 of a lower jaw 94 of a patient. As can be seen from Fig. 8, the distal portion 6 of the housing 2 has outer dimensions which are formed such that placement within the mouth of a patient is easy feasible. The distal portion 6 of the intraoral scanning device 1 is placed above the right hand portion of a lower jaw 94 of a patient to scan a tooth region 90 and a residual tooth region (92) (see Fig. 9). The residual tooth region 92 in this embodiment is a prepared tooth which has been prepared for receiving a crown afterwards. The residual tooth region 92 as well as the neighboring tooth region 90 have to be scanned, so that the crown can be designed and fitted onto the residual tooth region 92. In Fig. 9 the tooth region 90 as well as the residual tooth region 92 are enclosed by an intraoral interface structure 96 which defines an interior space 98 which can be filled with coupling medium or the like. The intraoral interface structure 96 can be attached to the distal portion 6 of the housing 2 and corresponds to the opening 38, and in particular to the acoustic window 40 as described above. The intraoral interface structure 96 also helps to position the distal portion 6 of the intraoral scanning device 1 during a scan process.

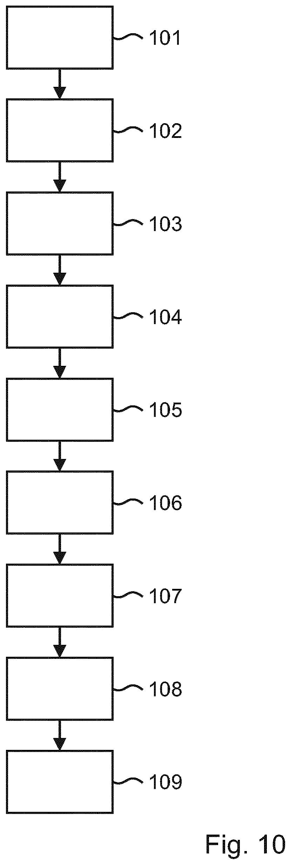

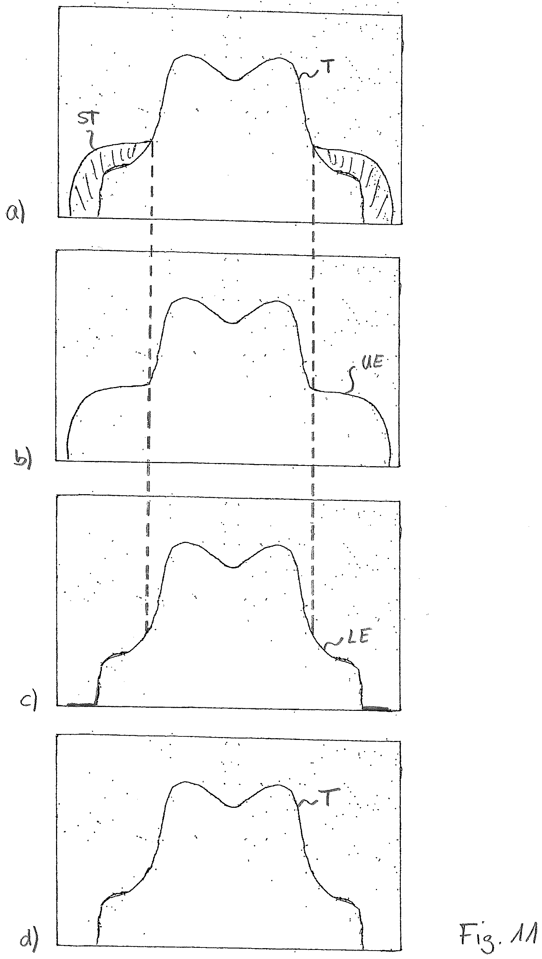

Fig. 10 shows a flowchart illustrating a method suitable for processing the ultrasound scan data recorded by the intraoral scanning device 1. In step 101, the method determines portions of the ultrasound scan data in proximity to surfaces of the tooth region or residual tooth region. How this is done is described in more detail with reference to Fig. 11, which shows further details of the method. As can be seen from Fig. 11 a), if we consider a slice through a tooth region or residual tooth region, the slice will show the tooth or residual tooth T and, where the tooth region or residual tooth region is covered by soft-tisue, e.g., gingiva, saliva, blood, or sulcular fluids, the slice will also show the soft-tissue ST. As can further be seen from Fig. 11 b) to d), here, the determination is achieved by extracting from the ultrasound scan data an upper envelope UE and a lower envelope LE of the surfaces of the tooth region or residual tooth region based on the amplitude of the ultrasound scan data and by determining the portions of the ultrasound scan data in proximity to surfaces of the tooth region or residual tooth region based on the upper envelope and the lower envelope. In more detail, the ultrasound scan data is processed on a slice-by-slice basis, wherein each slice is analyzed in order to determine in each column of the slice a first and a last position at which the amplitude of the ultrasound scan data exceeds a pre-defined threshold value. The first position is then regarded as forming part of the upper envelope UE and the last position can be regarded as forming part of the lower envelope LE. The totality of all first and last positions of all columns in all slices then forms the upper envelope UE and the lower envelope LE, respectively.

As can be seen from Fig. 11 a) to c), where the tooth region or residual tooth region is not covered with soft-tissue ST, the upper envelope UE substantially corresponds to the surface of the tooth or residual tooth T itself, whereas in covered regions it substantially corresponds to the top surface of the soft-tissue ST. In contrast, while the lower envelope also substantially corresponds to the surface of the tooth or residual tooth T itself where the tooth region or residual tooth region is not covered with soft-tissue ST, in covered regions it substantially corresponds to the bottom surface of the soft-tissue ST. It is noted, however, that due to the limited depth of focus the extracted upper and lower envelopes UE, LE can somewhat deviate from the true surfaces of the tooth region or residual tooth region. For example, the upper envelope UE and the lower envelope LE may not perfectly meet at the surface of the tooth or residual tooth T where the tooth region or residual tooth region is not covered with soft-tissue ST.

The portions of the ultrasound scan data in proximity to surfaces of the tooth region or residual tooth region are determined, here, as the portions of the ultrasound scana data between the upper envelope UE and the lower envelope LE, wherein an additional "safety margin" (not shown in the figure) can optionally be added on either side.

Additionally or alternatively, the determination of the portions of the ultrasound scan data in proximity to surfaces of the tooth region or residual tooth region can be achieved by applying a pre-defined sleeve model (not shown in the figure) that defines a sleeve around the surfaces of the tooth region or residual tooth region to the ultrasound image data. As described before, the ultrasound scan data can be processed e.g. on a slice-by-slice basis, wherein a slice of the sleeve model - or a dedicated slice sleeve model - can be fitted to the contour formed by the surfaces of the tooth region or residual tooth region in the slice. The slice of the sleeve model or the dedicated slice sleeve model can also be referred to as a "tube model", since it resembles a tube that encloses the formed contour.

Preferably, a plurality of pre-defined sleeve models resp. tube models are provided in a database, wherein a model that matches the surface geometry of the tooth region or residual tooth region can be selected from the database based on the ultrasound scan data and/or additional a-priori information. For instance, the model can be selected based on the dimensions, e.g., width, length and/or depth, of one or more of the upper and lower envelopes UE, LE described above. Additionally or alternatively, a-priori information about e.g. the number of teeth or residual teeth T in the scanned tooth region or residual tooth region, the location of the teeth or residual teeth T or the selected intraoral interface structure can be used for selecting the model. The selected model can then be applied to the ultrasound image data based on the above-described parameters / characteristics as well as the coordinates of the high frequency sonic head during the ultrasound scan. The pre-defined sleeve models resp. tube models can be determined, for instance, using statistical methods from a large number of ultrasound scans of different tooth regions or residual tooth regions.

Referring back to Fig. 10, in step 102, the method applies a synthetic aperture focusing technique (SAFT) only to the determined portions in order to enhance the depth of focus of the ultrasound scan data in the determined portions. In this way, the amount of ultrasound scan data to be processed can be reduced, resulting in a corresponding reduction of processing time. The applied SAFT method is based on the assumption that the focal point of a single ultrasound transducer can be viewed as a virtual acoustic point source of a spherical wave (VSAFT). This variant of the "original" SAFT method is particularly well suited for use with a highly focusing single ultrasound transducer and allows to obtain a resolution of the ultrasound scan data that is substantially independent of depth.

Since the sound field of a highly focusing single ultrasound transducer typically comprises additional side lobes that can lead to artifacts in the ultrasound scan data, the VSAFT method is combined, here, with a suitable weighting method, e.g., with the so-called "coherent factor", the "minimum variance beamforming" or an apodization window such as a boxcar window, a Hanning window or a Hann window.

In order to further optimize the resolution and to reduce noise, the SAFT-processed ultrasound scan data are filtered in step 103 with a plurality of frequency filters (e.g., in the range of 1 to 200 MHz, preferably 20 to 100 MHz). Thereafter, in step 104, the filtered ultrasound scan data are demodulated in order to determine the envelope. Optionally, a suitable grayscale coding and a further noise reduction by means of a median filtering can be performed in steps 105 and 106. In order to optimize the information content, the scanning process and the subsequent data processing may be repeated for different ultrasound directions.

In the case of subgingivally prepared teeth, the method removes, in step 107, portions of the ultrasound scan data corresponding to soft-tissue, in particular, the gingiva, of the tooth region or residual tooth region. Therewith, ultrasound scan data that obscure the preparation border of a tooth or residual tooth to be restored can be eliminated from the data record, preferably leaving only ultrasound scan data corresponding to the actual tooth or residual tooth.

The removal is also described in more detail with reference to Fig. 11. It is based on a similar process as the determination of the portions of the ultrasound scan data in proximity to surfaces of the tooth region or residual tooth region described above. In particular, an upper envelope UE and a lower envelope LE of the surfaces of the tooth region or residual tooth region can be extracted again based on the amplitude of the processed ultrasound scan data. Since the depth of focus of the ultrasound scan data has been enhanced by applying the SAFT method, the extracted upper and lower envelopes UE, IE will now resemble the surfaces of the tooth region or residual tooth region with a higher accuracy than before the SAFT processing. Based on the upper envelope UE and the lower envelope LE, the portions corresponding to the soft-tissue ST can then be identified and removed. For instance, an extend of the portions of the ultrasound scan data between the upper envelope UE and the lower envelope LE can be analyzed, wherein, when the extend exceeds a pre-defined threshold value, a portion is identified to correspond to soft-tissue ST, and when the extend does not exceed the pre-defined threshold value, the portion is identified to correspond to the tooth or residual tooth T. As as result of the proceesing, the tooth or residual tooth T without the soft-tissue ST is identified, as shown in Fig. 11 d).

Referring back to Fig. 10, in step 108, the method extracts points from the ultrasound scan data corresponding to surface points of a tooth or residual tooth based on a maximum intensity projection (MIP). In doing so, it is assumed that the location of the maximum echo amplitude corresponds to a point on the surface of a tooth or residual tooth. This allows for a reliable segmentation of the surfaces of the tooth or residual tooth. This step may also comprise an additional threshold-based filtering.

The extracted points, or if multiple scans have been performed, the points extracted from each scan, are finally reconstructed, in step 109, to generate a three-dimensional surface reconstruction of the tooth or residual tooth. Here, this is performed by fitting a model of the geometry of the tooth or residual tooth to the points. Thereby, the model, which is preferably a statistical model of the geometry of the tooth or residual tooth, is selected in dependence of the form of the tooth to be restored. For instance, the model is selected based on one or more of (i) the specific preparation of the tooth or residual tooth, (ii) the typ of the tooth or residual tooth (e.g., incisor or molar), and (iii) the size of the tooth or residual tooth (e.g., on a scale from 1 to 10). Here, a plurality of models having different characteristics in each of these dimensions are provided in a database. The fitting then reduces the average distance between the extracted points and the model using, for instance, a non-rigid iterative closest point (ICP) algorithm. As an alternative to this "model fitting"-based reconstruction, the points can be interpolated based on knowledge about the tooth or residual tooth. The knowlegde, in this case, can be the same or similar to the above-described characteristic dimensions of the geometry model, i.e., the specific preparation, typ and/or size of the tooth or residual tooth. The interpolation may be two-or three-dimensional and may be based, for instance, on the known thin-plate spline robust point matching algorithm (TPS-RPM). Finally, it is also contemplated to combine the "model fitting"-based approach and the knowledge-based interpolation approach.

## Claims

1. An intraoral scanning device (1) for recording ultrasound scan data in the mouth of the patient, the device comprising:
a housing (2) having a proximal portion (4) and a distal portion (6), the distal portion (6) being adapted for placement within the patients mouth;
a high frequency sonic head (20) comprising at least one transducer (36) for scanning a covered or non-covered tooth region (90) or residual tooth region (92) and mounted within the distal portion (6) of the housing (2), and
means for applying excitation signals to the sonic head (20) in order thereby to produce an ultrasonic wave which passes over at least part of the tooth region (90) or residual tooth region (92) such that the sonic head (20) receives ultrasonic waves reflected by the tooth region (90) or residual tooth region (92) to be scanned,
**characterized in that** the sonic head (20) is movable at least in a first and a second degree of freedom,
and by a drive assembly (22) arranged within the proximal portion (4) of the housing (2) for driving the sonic head (20) in the first and second degree of freedom such that the sonic head (20) is movable in a plane for applying the ultrasonic wave to a pre-determined region of the tooth region or residual tooth region.

2. The intraoral scanning device according to claim 1, comprising an intraoral interface structure (96) having a coupling medium for arrangement between the sonic head (20) and the tooth region (90) or residual tooth region (92) to be scanned when the intraoral interface structure (96) is placed in the mouth of the patient together with the sonic head (20).

3. The intraoral scanning device according to any of the preceding claims, wherein the first degree of freedom is a translational degree of freedom along a first translational axis (A_{L}) and the second degree of freedom is a rotational degree of freedom about a second rotational axis (A_{R1}), wherein the centre of rotation is offset from the sonic head (20).

4. The intraoral scanning device according to claim 3, wherein the sonic head (20) is movable in a third rotational degree of freedom, preferably about a third rotational axis (A_{R2}), which is perpendicular to the second axis (A_{R1}).

5. The intraoral scanning device according to any of the preceding claims, wherein the sonic head (20) comprises two or more, preferably three, transducers (36) which are arranged along an arcuate path and angled to each other.

6. The intraoral scanning device according to any of the preceding claims, wherein the drive assembly (22) comprises a linear actuator (50) for driving the sonic head (20) in the first degree of freedom and a rotational actuator (52) for driving the sonic head (20) in the second degree of freedom.

7. The intraoral scanning device according to claim 6, wherein the drive assembly (22) comprises a rotor bar (24) having a proximal and a distal end, the distal end carrying the sonic head (20) and the proximal end being connected to the rotational actuator (52) for rotating the rotor bar (24), so that the sonic head (20) moves in the second degree of freedom.

8. The intraoral scanning device according to claim 6 or 7, wherein the linear actuator (50) is coupled with the rotational actuator (52) for moving the rotational actuator (52) along the first axis (A_{L}).

9. The intraoral scanning device according to any of the preceding claims, wherein the distal portion (6) of the housing (2) is separated and sealed from the proximal portion (4), wherein the distal portion (6) of the housing (2) is filled with coupling medium.

10. The intraoral scanning device according to any of claims 7 to 9, wherein the rotor bar (24) protrudes a sealing membrane (26) separating the proximal (4) and distal portions (6) of the housing (2) and wherein the centre of rotation (A_{R1}) of the rotor bar (24) is arranged in the proximal portion (4).

11. The intraoral scanning device according to any of the preceding claims, comprising an acoustic window (40) in the distal (6) portion of the housing (2) such that ultrasonic waves can pass through the acoustic window (40).

12. The intraoral scanning device according to claim 11, wherein the acoustic window (40) is supported and tightened by means of a frame element (42) attached to or formed integral with a portion of the housing (2).

13. The intraoral scanning device according to claim 11 or 12, comprising a cover for the acoustic window (40) covering the acoustic window (40) in a closed state and being manually or automatically openable for giving free the acoustic window (40) before a recording process.

14. The intraoral scanning device according to any of the preceding claims, comprising at least one displacement sensor (68, 72) for measuring the position of the sonic head (20).

15. The intraoral scanning device according to claim 11, wherein the displacement sensor (68, 72) is arranged in the proximal portion (4) of the housing (2).

16. The intraoral scanning device according to any of the preceding claims, wherein the housing (2) comprises a substantially rigid base plate (16) which carries the drive assembly (22) and runs from the distal portion (6) to the proximal portion (4).

17. A method suitable for processing the ultrasound scan data recorded by the intraoral scanning device (1) of claim 1, comprising:
- determining portions of the ultrasound scan data in proximity to surfaces of the tooth region or residual tooth region, preferably, by extracting from the ultrasound scan data an upper envelope and a lower envelope of the surfaces of the tooth region or residual tooth region based on the amplitude of the ultrasound scan data and by determining the portions based on the upper envelope and the lower envelope and/or by applying a pre-defined sleeve model that defines a sleeve around the surfaces of the tooth region or residual tooth region to the ultrasound image data, and
- applying a synthetic aperture focusing technique (SAFT) only to the determined portions in order to enhance the depth of focus of the ultrasound scan data in the determined portions.

18. The method according to claim 17, comprising the step of:
- removing portions of the ultrasound scan data corresponding to soft-tissue of the tooth region or residual tooth region.

19. The method according to claim 18, comprising the step of:
- extracting points from the ultrasound scan data corresponding to surface points of a tooth or residual tooth based on a maximum intensity projection (MIP).

20. The method according to claim 19, comprising the step of:
- reconstructing the points to generate a three-dimensional surface reconstruction of the tooth or residual tooth by fitting a model of the geometry of the tooth or residual tooth to the points or by interpolating the points based on knowledge about the tooth or residual tooth.
